# FASCICULE DE BREVET EUROPEEN

(11) **EP 2 061 582 B1**
(45) Date de publication et mention de la délivrance du brevet: **23.12.2009**
(21) Numéro de dépôt: 07823479.6
(22) Date de dépôt: 05.09.2007
(51) Int. Cl.: B01F 3/04

(54) **PROCEDE ET INSTALLATION POUR LA MISE EN CONTACT DE L'OZONE DANS UN FLUX DE LIQUIDE, EN PARTICULIER D'EAU POTABLE OU D'EAU RESIDUAIRE**
VERFAHREN UND VORRICHTUNG ZUM INBERÜHRUNGBRINGEN VON OZON MIT EINEM FLÜSSIGKEITSSTROM, INBESONDERE EINEM TRINKWASSER- ODER ABWASSERSTROM
METHOD AND INSTALLATION FOR BRINGING OZONE INTO CONTACT WITH A FLOW OF LIQUID, IN PARTICULAR A FLOW OF DRINKING WATER OR WASTEWATER

(30) Priorité: 08.09.2006 FR 0607882
(43) Date de publication de la demande: 27.05.2009
(73) Titulaire: DEGREMONT, 92500 Rueil-Malmaison (FR)
(72) Inventeur: LIECHTI, Pierre-André, 8105 Regensdorf (CH); GENIER, Urbain, Québec, J7V 8L4 (CA); MOLES, Jacques, 92500 Rueil Malmaison (FR)
(74) Mandataire: Michardière, Bernard
(86) Numéro de dépôt international: PCT/FR2007/001438
(87) Numéro de publication internationale: WO 2008/029027

(56) Documents cités:
- EP-A- 1 380 537
- EP-B1- 0 086 019
- DE-A1- 1 940 458
- GB-A- 1 362 789
- US-A1- 6 001 247
- US-A1- 2005 218 085

## Description

L'invention est relative à un procédé pour la mise en contact de l'ozone dans un flux de liquide, en particulier d'eau potable ou d'eau résiduaire, en vue de son traitement par l'ozone.

FR 2 762 232 décrit un procédé et un dispositif pour la mise en contact de l'ozone dans des liquides, notamment de l'eau, selon lequel un mélange biphasique du flux de liquide à traiter et d'un gaz chargé d' ozone est réalisé et envoyé dans un appareil de dissolution de l'ozone dans le liquide, tel qu'un tube en U. Bien que ce procédé donne des résultats intéressants, il ne permet pas de bien maîtriser le mélange biphasique eau et gaz car le débit du flux de liquide à traiter dans lequel s'effectue l'injection de gaz est variable. En outre les conditions de mélange du liquide à traiter et du gaz chargé d'ozone n'assurent pas le contrôle du diamètre des bulles de gaz à l'entrée de l'appareil de dissolution. De plus, le dispositif pour mettre en oeuvre ce procédé nécessite des travaux de génie civil importants et coûteux.

EP 0 086 019 concerne également un procédé et un dispositif pour la mise en contact de l'ozone dans un flux de liquide à traiter. Selon ce document, on dérive une fraction du flux de liquide, on injecte dans le flux dérivé un gaz vecteur, air et/ou oxygène, chargé d'ozone avec formation de bulles de gaz, on mélange les bulles de gaz et le liquide pour former un flux dérivé biphasique, et on réintroduit le flux dérivé dans un courant vertical descendant du flux principal de liquide. Ce courant vertical subit en partie basse un changement de direction essentiellement à l'horizontale. La réintroduction du flux dérivé est effectuée à l'extrémité inférieure d'un tube d'injection plongeant dans le courant vertical descendant du flux principal. Ce dispositif nécessite également des travaux de génie civil importants pour réaliser une cuve cylindrique comportant en partie haute une plaque de ruissellement avec un espace libre constituant un étage de dégazage et créant une interruption du courant de liquide entre la partie basse de la cuve et la partie haute. Le courant descendant se reforme en partie basse. Une proportion non négligeable de bulles remonte à la surface du liquide se trouvant dans la partie basse de la cuve et s'échappe dans l'étage de dégazage, puis vers l'extérieur, de sorte que le rendement de dissolution de l'ozone s'en trouve diminué.

Un procédé et un dispositif analogue sont encore exposés dans le document US-A-6001247.

L'invention a pour but, surtout, de fournir un procédé pour la mise en contact de l'ozone dans un flux de liquide qui permet d'améliorer sensiblement le rendement de dissolution de l'ozone dans le liquide à traiter. L'invention a également pour but de proposer un procédé qui, pour sa mise en oeuvre, ne nécessite pas de travaux de génie civil spécifiques importants, et de préférence permet d'utiliser des installations déjà en place pour la collecte et/ou l'évacuation d'eau potable ou résiduaire.

Selon l'invention, un procédé pour la mise en contact de l'ozone dans un flux de liquide, en particulier d'eau potable ou d'eau résiduaire, en vue de son traitement par l'ozone, procédé selon lequel on dérive une fraction du flux de liquide, on injecte dans le flux dérivé un gaz vecteur, air et/ou oxygène, chargé d'ozone avec formation de bulles de gaz, on mélange les bulles de gaz et le liquide pour former un flux dérivé biphasique, et on réintroduit le flux dérivé dans un courant vertical descendant du flux principal, ce courant vertical subissant en partie basse un changement de direction essentiellement à l'horizontale, la réintroduction du flux dérivé étant effectuée à l'extrémité inférieure d'un tube d'injection plongeant dans le flux principal, est **caractérisé en ce que :**
- le courant vertical descendant forme une colonne continue de liquide,
- on assure un mélange statique dans le tube d'injection jusqu'au voisinage de sa sortie pour maintenir le diamètre des bulles inférieur à une valeur prédéterminée,
- et la réintroduction du flux dérivé biphasique dans le courant vertical descendant est réalisée sous forme d'au moins un jet présentant une composante de vitesse verticale vers le bas, cette réintroduction ayant lieu sous une hauteur de liquide et avec une composante de vitesse verticale vers le bas suffisantes pour que les bulles de gaz soient entraînées vers le bas, sans remonter.

De préférence, la réintroduction du flux dérivé biphasique dans le flux principal est réalisée à co-courant sous forme d'un jet dirigé verticalement vers le bas depuis une hauteur suffisante au-dessus du changement de direction pour que le jet s'étale sur toute la section horizontale du courant vertical descendant. Avantageusement, le jet de réintroduction du flux dérivé est un jet libre. Le demi-angle d'ouverture du jet est généralement de 15° à 20°.

Le débit du flux dérivé est maintenu sensiblement constant, quelle que soit la variation du débit du flux principal , la valeur du débit de flux dérivé étant choisie pour accepter la dose d'ozone nécessaire pour assurer le traitement du débit maximal de flux principal.

De préférence la composante verticale descendante de la vitesse du flux biphasique à la sortie du tube d'injection est supérieure à 3 m/s. La réintroduction du flux biphasique s'effectue sous une hauteur de liquide d'au moins 10 mètres.

Le diamètre des bulles à la sortie du tube d'injection est inférieur à 5mm, de préférence inférieur ou égal à 2 mm.

Le courant vertical descendant peut être situé dans une conduite verticale d'écoulement de liquide qui se raccorde à son extrémité inférieure à une conduite sensiblement horizontale. Cette conduite horizontale peut se raccorder à une conduite montante verticale, ou déboucher dans un ouvrage récepteur, par exemple rivière ou lac.

L'invention est également relative à une installation pour la mise en oeuvre du procédé défini précédemment.

Une telle installation comporte un canal d'arrivée du liquide à traiter, une conduite verticale descendante formant puits vers l'extrémité du canal d'arrivée, la conduite descendante se raccordant, en partie basse, à une conduite sensiblement horizontale, des moyens de pompage étant prévus pour prélever une fraction dérivée du flux en amont de la conduite verticale descendante et pour diriger le flux dérivé vers un ensemble de mélange recevant un gaz, air et/ou oxygène, chargé d'ozone, cette installation étant **caractérisée en ce que :**
- l'ensemble de mélange est disposé en partie haute d'un tube d'injection vertical qui se prolonge dans la conduite verticale descendante, laquelle est libre de tout obstacle de sorte que le courant vertical descendant forme une colonne continue de liquide,
- le tube d'injection vertical comporte à proximité de son extrémité inférieure un mélangeur statique pour maintenir le diamètre des bulles inférieur à une valeur prédéterminée, et son extrémité inférieure comporte au moins une ouverture pour assurer la réintroduction du flux dérivé biphasique dans le courant vertical descendant sous forme d'au moins un jet présentant une composante de vitesse verticale vers le bas,
   la longueur du tube d'injection et l'ouverture de sortie du jet étant prévues pour que la réintroduction ait lieu sous une hauteur de liquide et avec une composante de vitesse verticale vers le bas suffisantes pour que les bulles de gaz soient entraînées vers le bas, sans remonter.

De préférence le mélangeur statique se trouve à moins de 50 cm de ladite extrémité inférieure du tube d'injection.

De préférence, l'ouverture d'injection du tube est dirigée vers le bas et la réintroduction du flux dérivé biphasique dans le flux principal est réalisée à co-courant sous forme d'un jet dirigé verticalement vers le bas depuis une hauteur suffisante au-dessus du changement de direction pour que le jet s'étale sur toute la section horizontale du courant vertical descendant. Avantageusement, le tube d'injection est ouvert suivant toute sa section droite inférieure et le jet de réintroduction du flux dérivé est un jet libre.

Plusieurs mélangeurs statiques sont généralement répartis dans le tube d'injection. Ces mélangeurs statiques peuvent être installés de manière démontable. Chaque mélangeur statique peut être du type à chicanes formées par des plaques inclinées en sens opposé, disposées dans des manchons cylindriques.

L'installation comporte des moyens pour maintenir sensiblement constant le débit du flux dérivé, quelle que soit la variation du débit du flux principal , la valeur du débit de flux dérivé étant choisie pour accepter la dose d'ozone nécessaire au traitement du débit maximal de flux principal.

La longueur de la partie du tube d'injection plongeant dans la colonne de liquide est d'au moins 10 mètres.

La conduite verticale descendante est avantageusement constituée par une partie d'ouvrage déjà existant, notamment un émissaire d'eau résiduaire ou une adduction d'eau potable, qui se prolonge par une conduite horizontale remontant par une autre conduite verticale ascendante. Selon une autre possibilité, la conduite horizontale débouche dans une rivière ou un lac, ou un ouvrage de retenue d'eau.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une coupe verticale schématique d'une installation mettant en oeuvre le procédé de l'invention.
Fig. 2 est une coupe verticale à plus grande échelle d'une partie d'installation semblable à celle de Fig. 1, le schéma de Fig. 2 étant retourné de 180° autour d'un axe vertical par rapport à celui de Fig. 1.
Fig. 3 est une courbe illustrant la variation de la vitesse ascensionnelle, portée en ordonnée, d'une bulle de gaz dans de l'eau, le diamètre de la bulle étant porté en abscisse.
Fig. 4 est une vue en coupe schématique à plus grande échelle d'un tube d'injection selon l'invention.
Fig. 5 est une vue schématique en perspective à plus grande échelle d'un exemple de mélangeur statique à chicanes.
Fig. 6 est une coupe horizontale du tube d'injection, et
Fig.7 est une coupe verticale schématique d'une variante d'installation selon l'invention.

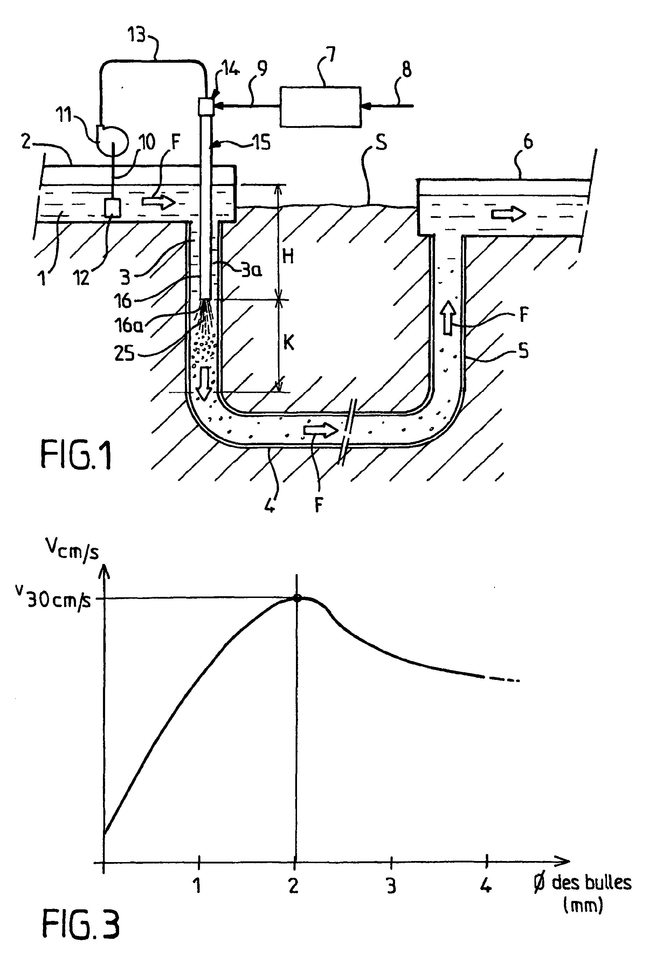

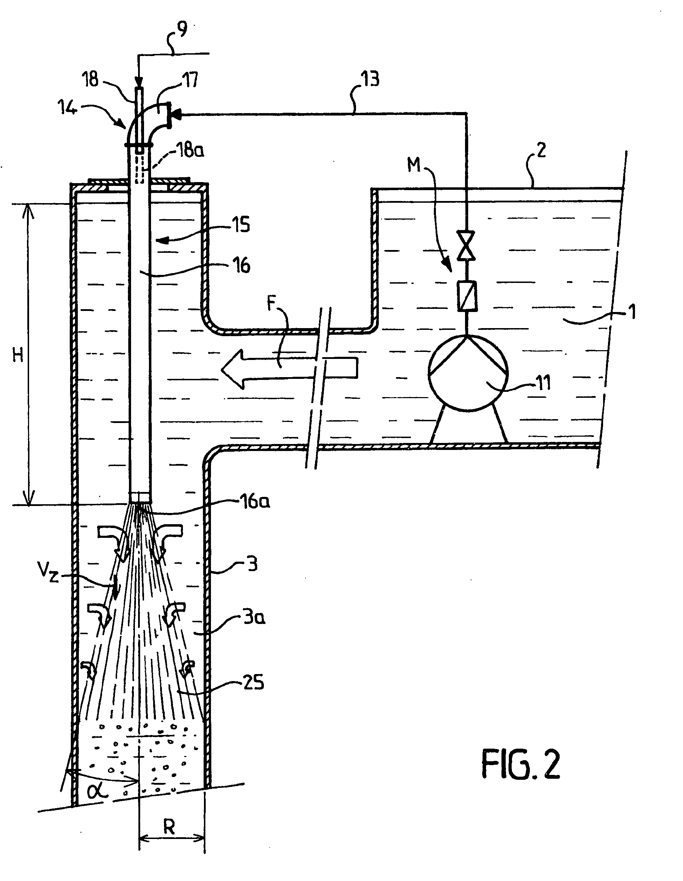

En se reportant aux dessins, notamment à Fig. 1 et 2, on peut voir une installation pour la mise en oeuvre d'un procédé selon l'invention pour la mise en contact de l'ozone dans un liquide à traiter. Dans l'exemple représenté, le liquide est constitué par une eau résiduaire, urbaine ou industrielle, arrivant selon un flux principal 1 dans un canal 2, fermé ou ouvert, en légère pente pour permettre l'écoulement par gravité. Le canal 2, vers son extrémité, s'ouvre au-dessus d'une conduite verticale descendante 3, formant puits. La conduite verticale descendante 3 est libre de tout obstacle dans sa section droite de sorte que le courant vertical descendant 3a forme une colonne continue de liquide.

La conduite 3 se raccorde à sa partie inférieure à une conduite sensiblement horizontale 4, en légère pente pour favoriser l'écoulement. Le courant de liquide subit ainsi un changement de direction à 90°. Selon le schéma de Fig. 1, la conduite 4 se raccorde à son extrémité aval à une conduite ascendante verticale 5 qui débouche en partie haute dans un canal 6, fermé ou ouvert à l'air libre, légèrement incliné sur l'horizontale.

A titre d'exemple non limitatif, le débit du flux principal 1 peut être supérieur à 20 m³/s. La hauteur de la conduite verticale 3 peut dépasser 50 mètres de sorte que la conduite horizontale 4 se trouve à une profondeur d'environ 50 m au-dessous du niveau S du sol. Le diamètre des conduites 3, 4 et 5 est adapté au débit de liquide à évacuer et peut être de l'ordre de plusieurs mètres, notamment d'environ 6 mètres.

L'ensemble des conduites 3, 4, 5 forme une sorte de U, étant précisé que la longueur de la conduite 4 horizontale peut être importante, par exemple de plusieurs kilomètres.

Il est également à noter que l'équipement de canaux 2, 6, et de conduites 3, 4 et 5 correspond à une installation déjà en place pour l'évacuation des eaux résiduaires. Selon une autre possibilité, cet équipement peut correspondre à une adduction d'eau potable.

Pour le traitement par l'ozone avec le procédé selon l'invention, l'installation comporte au moins un générateur d'ozone 7 alimenté par un gaz vecteur 8 constitué d'air sec, ou d'oxygène ou d'un mélange d'air et d'oxygène, donnant en sortie 9 un gaz vecteur riche en ozone sous pression relative, notamment d'environ 1.5 bar.

Un flux partiel 10 du liquide à traiter est soutiré au flux principal 1 par une pompe 11, si nécessaire à travers un filtre 12. La proportion de flux soutiré peut être d'environ 5% du flux principal ; cette proportion peut toutefois être comprise entre 1% et 40%, de préférence entre 5% et 20%. La pompe 11 peut être immergée comme illustré sur Fig.2. La pompe 11 débite le flux partiel dans un conduit 13 raccordé à un élément de mélange 14 du flux dérivé de liquide 10 et du gaz riche en ozone arrivant par le conduit 9 relié à l'élément 14. L'élément de mélange 14 est disposé en partie haute d'un appareil 15 de dissolution de l'ozone et de son gaz vecteur dans le liquide, cet appareil 15 fonctionnant selon le principe du "mélange statique".

L'appareil 15 comprend un tube d'injection cylindrique 16 (Fig. 2) qui se prolonge dans la conduite 3, sensiblement coaxialement. L'extrémité inférieure du tube 16 est située à une profondeur H, sous le niveau du liquide dans le canal 1, suffisante pour créer une pression hydrostatique de l'ordre de 1 bar au moins. Cette hauteur H, qui correspond à la longueur du tube plongeant dans le liquide, est d'environ 10 m au moins. Le tube 16 traverse le canal 2 pour plonger dans la conduite 3, la partie haute du tube 16 étant située au-dessus du niveau de l'eau dans le canal 1.

Comme visible sur Fig.2, l'élément de mélange 14 comporte un coude 17 de raccordement entre la conduite horizontale 13 de refoulement de la pompe 11 et le tube vertical 16. Ce coude 17 est traversé par une tubulure 18 verticale, coaxiale au tube 16, raccordée en partie haute à la conduite 9 d'arrivée de gaz riche en ozone. La partie inférieure de la tubulure 18 est située dans le tube 16 et fermée axialement par une paroi comportant des orifices de passage du gaz, de tels orifices étant également prévus sur la paroi cylindrique de la tubulure. En variante, l'élément de mélange 14 peut être constitué par un hydro-éjecteur.

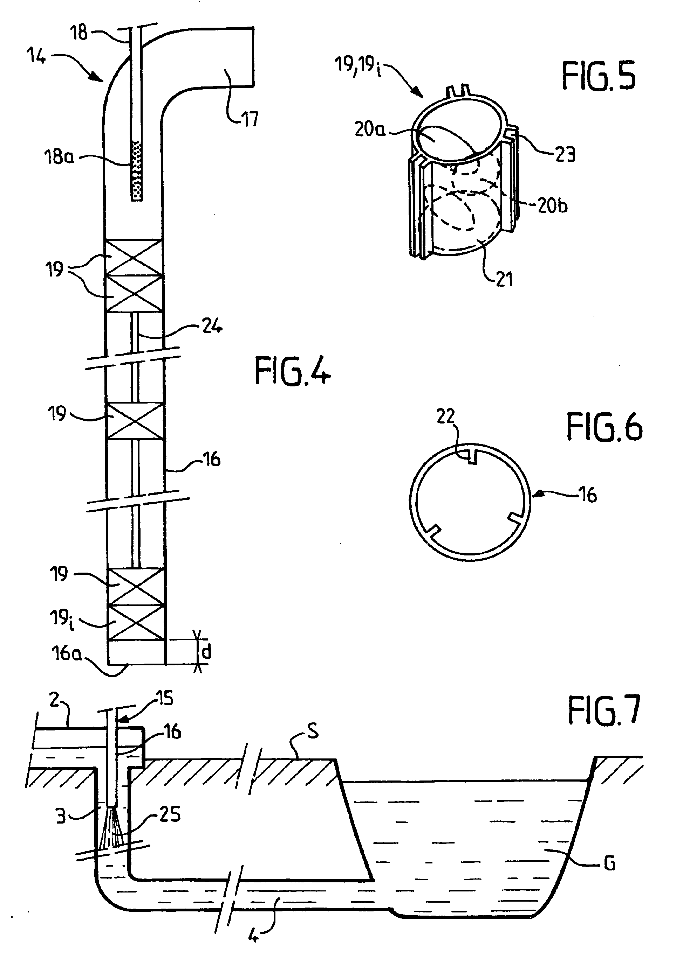

Le tube 16 comporte intérieurement, au-dessous de l'élément de mélange 14, plusieurs mélangeurs statiques 19 (voir Fig.4), de préférence à chicanes, répartis suivant la longueur du tube, de manière démontable.

Le dernier mélangeur statique vers le bas 19i (Fig. 4) est situé à proximité de l'extrémité basse du tube 16. La distance d entre l'extrémité basse et le mélangeur 19i est de préférence inférieure à 50 cm.

Les mélangeurs 19, 19i peuvent comporter des plaques 20a, 20b (Fig.5) inclinées en sens contraire pour constituer des déflecteurs opposés, tout en étant orientées suivant le sens d'écoulement du liquide. Les plaques 20a, 20b sont disposées à l'intérieur de manchons cylindriques 21 montés coulissants à l'intérieur du tube 16. Les plaques 20a, 20b forment des chicanes favorisant le contrôle du diamètre des bulles de gaz et le mélange de ces bulles avec le liquide. Le montage des mélangeurs 19, 19i dans le tube 16 peut être réalisé de manière coulissante à l'aide de rails longitudinaux 22 fixés contre la paroi intérieure du tube 16, propres à s'engager dans des rainures 23 prévues à la périphérie des manchons 21. Trois rails 22 répartis à 120° peuvent être prévus comme montré sur Fig. 6, auxquels correspondent trois rainures 23.

Les différents mélangeurs statiques 19 répartis suivant la longueur du tube 16 sont réunis par une tige centrale 24 pour former un ensemble facile à monter et à démonter, notamment pour un nettoyage.

Le tube 16 est ouvert en partie basse sur toute sa section de sorte que l'appareil de dissolution 15 produit un "jet libre" 25 dirigé verticalement vers le bas du flux biphasique. Ce jet 25 s'étale progressivement. Le demi-angle α (Fig.2) d'ouverture du jet 25 est généralement de l'ordre de 15° à 20° par rapport à la direction axiale du jet. La distance K entre l'extrémité basse du tube 16 et le début du coude se raccordant à la conduite 3 est suffisante pour que le jet libre s'étale sur toute la section horizontale de la conduite 3 et se mélange complètement avec le fluide principal dans la conduite descendante 3 avant le changement de direction. En désignant par R le diamètre de la conduite 3, la distance K doit être supérieure à R / tgα, soit de l'ordre de 11 m pour R égal à 3m.

La composante verticale Vz (Fig.2) de la vitesse de sortie du jet à l'extrémité basse du tube 16 est descendante et est d'au moins 3 m/s. Le diamètre des bulles de gaz, essentiellement sphériques, est inférieur à 5 mm, de préférence inférieur à 2 mm. Ces conditions, combinées avec une pression hydrostatique suffisante due à la profondeur H, font que les bulles de gaz sont entraînées vers le bas, avec mise en solution progressive presque complète de l'ozone, et de son gaz vecteur, dans le liquide. On obtient une disparition progressive presque complète de l'aspect biphasique. En partie basse de la conduite 3 seules subsistent des bulles de gaz vecteur dont la teneur en ozone est fortement diminuée, sinon nulle. La profondeur H+K du puits vertical d'entrée est suffisante pour garantir un bon mélange et une mise en solution efficace de l'ozone et de son gaz vecteur.

Bien que l'injection sous forme d'un "jet libre" dirigé verticalement vers le bas soit préférée, on pourrait prévoir une sortie annulaire en extrémité basse du tube 16 de sorte que le jet aurait la forme d'un cône creux d'axe vertical. L'axe du jet pourrait même former un angle avec la direction verticale, dans la mesure où la composante verticale descendante de la vitesse, pour les directions d'injection les plus écartées de la verticale, est d'au moins 3m/s.

D'une manière générale, la vitesse de sortie du jet en extrémité basse du tube 16 est de préférence au moins huit fois supérieure à la vitesse verticale ascensionnelle des bulles.

La partie sensiblement horizontale correspondant à la conduite 4 peut avoir une longueur quelconque. Cette section favorise, si nécessaire, l'achèvement de la dissolution de l'ozone dans le liquide. Le puits vertical de sortie 5 peut avoir une hauteur quelconque et alimenter un ouvrage de sortie et/ou de déversement, tel qu'un lac, une rivière, un canal ou tout autre ouvrage récepteur.

Les caractéristiques hydrodynamiques du tube en U formé par l'ensemble des conduites 3, 4 et 5, du tube d'injection 16 et du jet libre 25 sont prévues pour assurer des vitesses de fluide mono- et biphasique suffisantes pour garantir le maintien d'un écoulement "à flux piston". Un écoulement "à flux piston" est un écoulement tel que les particules de liquide situées dans un plan orthogonal à la vitesse d'ensemble du courant ont toutes même vitesse et restent dans ce plan.

En désignant par p grammes / m³ la dose d'ozone exprimée en masse nécessaire pour traiter 1 m³ de liquide, et par Qmax le débit maximal de flux principal à traiter, exprimé en m³ /s, le débit maximal d'ozone que doit accepter le flux dérivé est égal à p* Qmax. En désignant par β la proportion massique (qui peut être de l'ordre de 12%) d'ozone dans le gaz vecteur, le débit massique de gaz vecteur pour introduire le débit maximal d'ozone sera obtenu par la formule p* Qmax /β. Si le flux dérivé de liquide peut accepter une proportion massique γ de gaz chargé d'ozone, le débit de flux dérivé Qdv pour traiter le débit maximal de flux principal sera p* Qmax /βγ. Le débit de flux dérivé sera maintenu à cette valeur sensiblement constante qui sera suffisante pour le débit maximal Qmax , et avantageuse pour des débits inférieurs de flux principal.

La dose d'ozone utilisée pour la purification de l'eau peut varier d'environ 15 mg/l, soit 15g/m³, pour une eau urbaine jusqu'à 200 mg/l, soit 200g/m³, pour une eau industrielle. Dans le cas du traitement d'une eau potable, la dose typique est de 2 à 5 mg/l, soit 2 à 5 g/m³.

Des moyens M, comprenant par exemple une vanne manuelle d'ajustement et un indicateur de débit, sont prévus pour maintenir à la susdite valeur constante le débit du flux dérivé, quelle que soit la variation du débit du flux principal 1. Ceci permet de bien maîtriser l'injection du gaz riche en ozone dans le débit de liquide pour le contrôle du diamètre des bulles.

L'intérêt de l'ozone pour le traitement de l'eau tient notamment à ce que l'ozone non seulement assure une désinfection de l'eau mais également une oxydation des perturbateurs tels que les endocriniens (hormones), colorants, mousse, ou DCO dure. En outre l'ozone détruit la pollution au lieu d'en effectuer un simple déplacement chimique.

Le fonctionnement de l'installation est le suivant.

L'écoulement du liquide s'effectue suivant les flèches F de Fig. 1. Le flux principal d'eau à traiter arrivant par le canal 1 descend, sous forme d'un colonne continue de liquide, dans la conduite verticale 3 où est placé le tube 16 injectant un flux partiel biphasique riche en ozone. Ce flux biphasique est entraîné vers le fond de la conduite 3 par le flux descendant de l'eau à traiter et est complètement mélangé avec celui-ci par l'effet de jet libre 25. Le jet libre qui sort du tube 16 avec une vitesse de l'ordre de 3 à 4 m/s, perd de la vitesse en s'écartant pour finir avec une vitesse de l'ordre de 0,3 m/s dirigée vers le bas, suffisante pour, en combinaison avec la pression hydrostatique, empêcher une remontée des bulles et un effet de rétention gazeuse.

Le tube d'injection 16 avec les mélangeurs 19, 19i est calculé pour qu'avec une eau propre, à la sortie du dernier mélangeur 19i proche de la sortie du tube 16, le diamètre des bulles de gaz sensiblement sphériques dans le liquide soit d'environ 2 mm. Dans le cas d'une eau résiduaire avec des matières organiques, en raison de la tension superficielle différente par rapport à une eau propre, le diamètre des bulles sera encore plus petit. La courbe de Fig. 3 montre que le diamètre de bulles de 2 mm correspond à un maximum de la vitesse ascensionnelle des bulles dans le liquide, ce maximum correspondant sensiblement à 30 cm/s. La vitesse d'entraînement des bulles vers le bas étant supérieure à ce maximum, les bulles ne remontent pas. L'augmentation de la pression hydrostatique accompagnée de la dissolution du gaz dans le liquide provoque une diminution de leur diamètre. Pour des diamètres de bulles supérieurs à 2mm, les bulles ont tendance à se déformer et ne restent pas sphériques. Pour des diamètres de bulles inférieurs à 2mm, la forme sphérique des bulles est conservée avec une vitesse ascensionnelle qui diminue.

Le cisaillement contrôlé provoqué dans le tube d'injection 16 par le principe du mélange "statique" et les chicanes des mélangeurs 19, 19i conduit à la formation de petites bulles dans le flux partiel, bulles dont le diamètre peut varier entre 0,5 à 5 mm et que l'on peut calibrer, selon la qualité du fluide à traiter. Dans la zone du jet libre 25 de la conduite verticale vers le bas, en aval de la sortie du tube 16, et dans le reste de la partie inférieure de la conduite verticale 3, le résiduel de l'ozone de la phase gazeuse est transféré en solution dans le flux d'eau à traiter descendant de même qu'une certaine partie du gaz vecteur. Selon la quantité d'ozone chargée dans l'eau à traiter, de la concentration de l'ozone dans son gaz vecteur et du type de gaz vecteur, la mise en solution est plus ou moins marquée.

Lorsque le gaz vecteur est de l'oxygène, cet effet est particulièrement évident, allant jusqu'à sa dissolution presque complète.

Dans la conduite verticale 3 l'écoulement est en tout endroit du type "à flux piston" c'est-à-dire que le liquide progresse selon des plans perpendiculaires à l'axe d'écoulement. Dans la partie horizontale 4 l'écoulement reste du type "à flux piston", même si un coussin de gaz vecteur se forme à la partie supérieure de la conduite 4. Dans la conduite verticale de sortie 5, l'écoulement pourra perdre son caractère "à flux piston", en raison du fait qu'une partie du gaz vecteur dégazera, mais sans ozone complètement dissous dans le liquide.

Du fait que l'écoulement est du type "à flux piston" dans la conduite verticale d'entrée 3 et dans la partie horizontale 4 du "tube en U", on peut affirmer que le rapport T₁₀/Tₕ (T₁₀ est le temps de sortie de 10% de la quantité d'ozone injecté) et Tₕ est le temps de "séjour hydraulique" égal à la somme des volumes de la conduite verticale d'entrée 3 et de la conduite horizontale 4 divisée par le débit de liquide) est très proche de la valeur 1. La conséquence en est que l'on peut ainsi réduire sensiblement le volume de l'ouvrage en question pour un "C Tₕ " donné par rapport à tout système n'ayant pas un écoulement du type "à flux piston" aussi marqué. "C" est la concentration résiduelle moyenne d'ozone pendant le laps de temps Tₕ. Dans la partie ascendante 5, les bulles de gaz peuvent avoir une vitesse ascensionnelle terminale supérieure à la vitesse du liquide, ces différences de vitesses pouvant générer une perturbation de l'écoulement affectant le caractère "flux piston" du système.

Pratiquement, dans une installation où la sortie 16a du tube 16 est située à une profondeur H d'environ 10 m, l'ozone est entièrement dissous dans le liquide à une profondeur d'environ 35 m. Cette dissolution complète de l'ozone permet d'éviter la nécessité d'un destructeur d'ozone en tête du canal de sortie 6 puisque le gaz vecteur susceptible de dégazer dans la conduite verticale de montée 5 ne comporte plus d'ozone.

Comme déjà indiqué, si tout le gaz vecteur ne peut être mis en solution dans le liquide, les bulles diminuent cependant de diamètre et sont maintenues en suspension dans le liquide comme des matières solides.

A titre d'exemple non limitatif, dans le cas d'un flux principal de 21 m³/s le débit de flux dérivé est d'environ 0,8 m³/s et le diamètre interne du tube 16 est de 0.6m (60 cm).

L'écartement du jet 25 entraîne un écartement des bulles et empêche tout phénomène de coalescence.

Fig. 7 est un schéma d'une variante de réalisation selon laquelle la conduite horizontale 4 au lieu d'être prolongée par une conduite ascendante 5, débouche dans le fond d'une rivière G ou d'un lac ou autre ouvrage récepteur.

Il est à noter que l'installation et le procédé proposés ne créent pratiquement aucune perte de charge, mais simplement un rideau de bulles.

## Revendications

1. Procédé pour la mise en contact de l'ozone dans un flux de liquide, en particulier d'eau potable ou d'eau résiduaire, en vue de son traitement par l'ozone, selon lequel on dérive une fraction du flux de liquide, on injecte dans le flux dérivé un gaz vecteur, air et/ou oxygène, chargé d'ozone avec formation de bulles de gaz, on mélange les bulles de gaz et le liquide pour former un flux dérivé biphasique, et on réintroduit le flux dérivé dans un courant vertical descendant du flux principal de liquide, ce courant vertical subissant en partie basse un changement de direction essentiellement à l'horizontale, la réintroduction du flux dérivé étant effectuée à l'extrémité inférieure d'un tube d'injection plongeant dans le courant vertical descendant du flux principal,
**caractérisé en ce que :**
- le courant vertical descendant (3a) forme une colonne continue de liquide,
- on assure un mélange statique dans le tube d'injection (16) jusqu'au voisinage de sa sortie pour maintenir le diamètre des bulles inférieur à une valeur prédéterminée,
- et la réintroduction du flux dérivé biphasique dans le courant vertical descendant (3a) est réalisée sous forme d'au moins un jet présentant une composante de vitesse verticale vers le bas, cette réintroduction ayant lieu sous une hauteur (H) de liquide et avec une composante de vitesse verticale vers le bas suffisantes pour que les bulles de gaz soient entraînées vers le bas, sans remonter.

2. Procédé selon la revendication 1, **caractérisé en ce que** la réintroduction du flux dérivé biphasique dans le flux principal est réalisée à co-courant sous forme d'un jet (25) dirigé verticalement vers le bas depuis une hauteur (K) suffisante au-dessus du changement de direction pour que le jet s'étale sur toute la section horizontale du courant vertical descendant.

3. Procédé selon la revendication 1 ou 2, **caractérisé en ce que** le jet de réintroduction du flux dérivé est un « jet libre ».

4. Procédé selon l'une quelconque des revendications précédente, **caractérisé en ce que** le débit du flux dérivé est maintenu sensiblement constant, quelle que soit la variation du débit du flux principal, la valeur du débit de flux dérivé étant choisie pour accepter la dose d'ozone nécessaire pour assurer traitement du débit maximal de flux principal.

5. Procédé selon l'une quelconque des revendications précédentes, **caractérisé en ce que** la composante verticale descendante de vitesse du flux biphasique à la sortie du tube d'injection est supérieure à 3 mètres / seconde.

6. Procédé selon l'une quelconque des revendications précédentes **caractérisé en ce que** la réintroduction du flux biphasique s'effectue sous une hauteur de liquide (H) d'au moins 10 mètres.

7. Procédé selon l'une quelconque des revendications précédentes **caractérisé en ce que** le diamètre des bulles à la sortie du tube d'injection est inférieur à 5mm.

8. Procédé selon la revendication 7, **caractérisé en ce que** le diamètre des bulles à la sortie du tube d'injection est inférieur ou égal à 2 mm.

9. Procédé selon l'une quelconque des revendications précédentes, **caractérisé en ce que** le courant vertical descendant (3a) est situé dans une conduite verticale (3) d'écoulement de liquide qui se raccorde à son extrémité inférieure à une conduite sensiblement horizontale (4).

10. Installation pour la mise en oeuvre d'un procédé selon l'une quelconque des revendications précédentes, comportant un canal d'arrivée (2) du liquide à traiter, une conduite verticale descendante (3) formant puits vers l'extrémité du canal d'arrivée, la conduite descendante se raccordant, en partie basse, à une conduite sensiblement horizontale (4), des moyens de pompage (11) étant prévus pour prélever une fraction dérivée du flux en amont de la conduite verticale descendante et pour diriger le flux dérivé vers un ensemble de mélange (14) recevant un gaz, air et/ou oxygène, chargé d'ozone, **caractérisée en ce que :**
- l'ensemble de mélange (14) est disposé en partie haute d'un tube d'injection vertical (16) qui se prolonge dans la conduite verticale descendante (3), laquelle est libre de tout obstacle de sorte que le courant vertical descendant (3a) forme une colonne continue de liquide,
- le tube d'injection vertical (16) comporte à proximité de son extrémité inférieure un mélangeur statique (19i) pour maintenir le diamètre des bulles inférieur à une valeur prédéterminée, et son extrémité inférieure comporte au moins une ouverture (16a) pour assurer la réintroduction du flux dérivé biphasique dans le courant vertical descendant sous forme d'au moins un jet (25) présentant une composante de vitesse verticale (Vz) vers le bas,
la longueur du tube d'injection (16) et l'ouverture de sortie (16a) du jet étant prévues pour que la réintroduction ait lieu sous une hauteur (H) de liquide et avec une composante de vitesse verticale (Vz) vers le bas suffisantes pour que les bulles de gaz soient entraînées vers le bas, sans remonter.

11. Installation selon la revendication 10, **caractérisée en ce que** le mélangeur statique (19i) se trouve à moins de 50 cm de l'extrémité inférieure du tube d'injection (16).

12. Installation selon la revendication 10 ou 11, **caractérisée en ce que** l'ouverture d'injection (16a) du tube est dirigée vers le bas et la réintroduction du flux dérivé biphasique dans le flux principal est réalisée à co-courant sous forme d'un jet (25) dirigé verticalement vers le bas depuis une hauteur suffisante (K) au-dessus du changement de direction pour que le jet s'étale sur toute la section horizontale du courant vertical descendant.

13. Installation selon la revendication 12, **caractérisée en ce que** le tube d'injection (16) est ouvert suivant toute sa section droite inférieure et le jet de réintroduction du flux dérivé est un « jet libre ».

14. Installation selon l'une quelconque des revendications 10 à 13, **caractérisée en ce que** plusieurs mélangeurs statiques (19) sont répartis dans le tube d'injection et sont installés de manière démontable.

15. Installation selon l'une quelconque des revendications 10 à 14, **caractérisée en ce que** chaque mélangeur statique (19, 19i) est du type à chicanes formées par des plaques inclinées en sens opposé, disposées dans des manchons cylindriques.

16. Installation selon l'une quelconque des revendications 10 à 15, **caractérisée en ce qu'**elle comporte des moyens (M) pour maintenir sensiblement constant le débit du flux dérivé, quelle que soit la variation du débit du flux principal , la valeur du débit de flux dérivé étant choisie pour accepter la dose d'ozone nécessaire au traitement du débit maximal de flux principal.

17. Installation selon l'une quelconque des revendications 10 à 16, **caractérisée en ce que** la longueur de la partie du tube d'injection (16) plongeant dans la colonne de liquide est d'au moins 10 mètres.

18. Installation selon l'une quelconque des revendications 10 à 17, **caractérisée en ce que** la conduite verticale descendante (3) est constituée par une partie d'ouvrage déjà existant, émissaire d'eau résiduaire ou conduite d'adduction d'eau potable, qui se prolonge par une conduite sensiblement horizontale (4).

## Claims

1. Method for bringing ozone into contact with a flow of liquid, in particular a flow of drinking water or wastewater, in preparation for its treatment with ozone, a method according to which a fraction of the liquid flow is tapped off, a carrier gas, air and/or oxygen, laden with ozone is injected into the tapped-off flow with the formation of gas bubbles, the gas bubbles and the liquid are mixed so as to form a two-phase tapped-off flow, and the tapped-off flow is reintroduced into a descending vertical stream of the main flow of liquid, this vertical stream undergoing, at the bottom, a change of direction to essentially the horizontal, the tapped-off flow being reintroduced at the lower end of an injection tube immersed in the descending vertical stream of the main flow, **characterised in that:**
- the descending vertical stream (3a) forms a continuous liquid column,
- static mixing is provided in the injection tube (16) as far as the vicinity of its outlet to keep the diameter of the bubbles below a predetermined value,
- and the two-phase tapped-off flow is reintroduced into the descending vertical stream (3a) in the form of at least one jet having a vertically downward velocity component, this reintroduction taking place below a height (H) of liquid and with a vertically downward velocity component, which are sufficient for the gas bubbles to be entrained downwards, without rising.

2. Method according to claim 1, **characterised in that** the two-phase tapped-off flow is reintroduced into the main flow in co-current in the form of a jet (25) directed vertically downwards from a sufficient height (K) above the change of direction for the jet to spread over the entire horizontal section of the descending vertical stream.

3. Method according to either claim 1 or claim 2, **characterised in that** the reintroduction jet of the tapped-off flow is a "free jet".

4. Method according to any one of the preceding claims, **characterised in that** the flow rate of the tapped-off flow is kept substantially constant, regardless of the variation in the flow rate of the main flow, the value of the flow rate of the tapped-off flow being selected to accept the dose of ozone necessary to carry out treatment of the maximum flow of the main flow.

5. Method according to any one of the preceding claims, **characterised in that** the descending vertical speed component of the two-phase flow at the outlet of the injection tube is greater than 3 metres / second.

6. Method according to any one of the preceding claims, **characterised in that** the two-phase flow is reintroduced below a liquid height (H) of at least 10 metres.

7. Method according to any one of the preceding claims, **characterised in that** the diameter of the bubbles at the outlet of the injection tube is less than 5 mm.

8. Method according to claim 7, **characterised in that** the diameter of the bubbles at the outlet of the injection tube is less than or equal to 2 mm.

9. Method according to any one of the preceding claims, **characterised in that** the descending vertical stream (3a) is located in a vertical pipe (3) for the flow of liquid which is connected at its lower end to a substantially horizontal pipe (4).

10. Installation for implementing a method according to any one of the preceding claims, comprising an inlet channel (2) for the liquid to be treated, a descending vertical pipe (3) forming a well towards the end of the inlet channel, the descending pipe joining, at the bottom, a substantially horizontal pipe (4), pumping means (11) being provided for removing a tapped-off fraction of the flow upstream of the descending vertical pipe and for directing the tapped-off flow towards a mixing unit (14) receiving a gas, air and/or oxygen, laden with ozone, this installation being **characterised in that:**
- the mixing unit (14) is arranged in the upper part of a vertical injection tube (16) which extends in the descending vertical pipe (3) which is free of all obstacles such that the descending vertical stream (3a) forms a continuous liquid column,
- the vertical injection tube (16) comprises close to its lower end a static mixer (19i) for keeping the diameter of the bubbles below a predetermined value, and its lower end comprises at least one opening (16a) for the reintroduction of the two-phase tapped-off flow into the descending vertical stream in the form of at least one jet (25) having a vertically downward velocity component (Vz),
the length of the injection tube (16) and the outlet opening (16a) of the jet being provided so that the reintroduction takes place below a height (H) of liquid and with a vertically downward velocity component (Vz) which are sufficient for the gas bubbles to be entrained downwards, without rising.

11. Installation according to claim 10, **characterised in that** the static mixer (19i) is located at less than 50 cm from the lower end of the injection tube (16).

12. Installation according to either claim 10 or claim 11, **characterised in that** the injection opening (16a) of the tube is directed downwards and the two-phase tapped-off flow is reintroduced into the main flow in co-current in the form of a jet (25) directed vertically downwards from a sufficient height (K) above the change of direction for the jet to spread over the complete horizontal section of the descending vertical stream.

13. Installation according to claim 12, **characterised in that** the injection tube (16) is open along its entire lower cross section and the reintroduction jet of the tapped-off flow is a "free jet".

14. Installation according to any one of claims 10 to 13, **characterised in that** a plurality of static mixers (19) are distributed in the injection tube and are installed such that they can be dismounted.

15. Installation according to any one of claims 10 to 14, **characterised in that** each static mixer (19, 19i) is of the baffle type formed by plates which are inclined in opposite directions and arranged inside cylindrical sleeves.

16. Installation according to any one of claims 10 to 15, **characterised in that** it comprises means (M) for keeping the flow rate of the tapped-off flow substantially constant, regardless of the variation in the flow rate of the main flow, the value of the flow rate of the tapped-off flow being selected to accept the dose of ozone which is necessary for the treatment of the maximum flow of the main flow.

17. Installation according to any one of claims 10 to 16, **characterised in that** the length of the portion of the injection tube (16) immersed in the liquid column is at least 10 metres.

18. Installation according to any one of claims 10 to 17, **characterised in that** the descending vertical pipe (3) is formed by part of a structure which already exists, a wastewater outflow or a supply pipe of drinking water, which is extended by a substantially horizontal pipe (4).

## Patentansprüche

1. Verfahren zum Inberührungbringen von Ozon mit einem Flüssigkeitsstrom, insbesondere einem Trinkwasser- oder Abwasserstrom, zu dessen Behandlung mit Ozon, wobei ein Teil des Flüssigkeitsstroms abgezweigt wird, in den Abzweigstrom ein mit Ozon angereichertes \/ektorgas, Luft und/oder Sauerstoff unter Gasblasenbildung injiziert wird, die Gasblasen und die Flüssigkeit zur Bildung eines zweiphasigen Abzweigstroms gemischt werden, und der Abzweigstrom in eine vertikale Abwärtsströmung des Flüssigkeitshauptstroms wieder eingeleitet wird, wobei die vertikale Strömung im unteren Teil eine im Wesentlichen in die Horizontale gerichtete Richtungsänderung erfährt, wobei das Wiedereinleiten des Abzweigstroms am unteren Ende eines Injektionsrohres erfolgt, das in die vertikale Abwärtsströmung des Hauptstroms eingetaucht ist, **dadurch gekennzeichnet, dass:**
- die vertikale Abwärtsströmung (3a) eine durchgehende Flüssigkeitssäule bildet;
- ein statisches Mischen in dem Injektionsrohr (16) bis in die Nähe des Auslasses gewährleistet wird, um den Durchmesser der Blasen unter einem vorbestimmten Wert zu halten,
- und das Wiedereinleiten des zweiphasigen Abzweigstroms in die vertikale Abwärtsströmung (3a) als mindestens ein Strahl mit einer vertikal nach unten gerichteten Geschwindigkeitskomponente realisiert ist, wobei das Wiedereinleiten unter einer Höhe (H) der Flüssigkeit und mit einer vertikal nach unten gerichteten Geschwindigkeitskomponente erfolgt, welche ausreichen, die Gasblasen nach unten mitzunehmen, ohne dass sie aufsteigen.

2. Verfahren nach Anspruch 1, **dadurch gekennzeichnet, dass** das Wiedereinleiten des zweiphasigen Abzweigstroms in den Hauptstrom in Fließrichtung als vertikal nach unten gerichteter Strahl (25) in einer ausreichenden Höhe (K) über der Richtungsänderung erfolgt, damit der Strahl sich über den gesamten horizontalen Querschnitt der vertikalen Abwärtsströmung ausbreitet.

3. Verfahren nach Anspruch 1 oder 2, **dadurch gekennzeichnet, dass** der Strahl zum Wiedereinleiten des Abzweigstroms ein "freier Strahl" ist.

4. Verfahren nach einem der vorhergehenden Ansprüche, **dadurch gekennzeichnet, dass** der Durchsatz des Abzweigstroms ungeachtet einer Veränderung des Durchsatzes des Hauptstroms im Wesentlichen konstant gehalten wird, wobei der Betrag des Durchsatzes des Abzweigstroms so gewählt ist, dass die zur Behandlung des maximalen Durchsatzes des Hauptstroms erforderliche Ozondosis aufgenommen wird.

5. Verfahren nach einem der vorhergehenden Ansprüche, **dadurch gekennzeichnet, dass** die vertikal abwärts gerichtete Geschwindigkeitskomponente des zweiphasigen Stroms am Ausgang des Injektionsrohres größer als 3 Meter/Sekunde ist.

6. Verfahren nach einem der vorhergehenden Ansprüche, **dadurch gekennzeichnet, dass** das Wiedereinleiten des zweiphasigen Stroms unter einer Flüssigkeitshöhe (H) von mindestens 10 Metern erfolgt.

7. Verfahren nach einem der vorhergehenden Ansprüche, **dadurch gekennzeichnet, dass** der Durchmesser der Blasen am Ausgang des Injektionsrohres kleiner als 5 mm ist.

8. Verfahren nach Anspruch 7, **dadurch gekennzeichnet, dass** der Durchmesser der Blasen am Ausgang des Injektionsrohres kleiner oder gleich 2 mm ist.

9. Verfahren nach einem der vorhergehenden Ansprüche, **dadurch gekennzeichnet, dass** die vertikale Abwärtsströmung (3a) sich in einer vertikalen Flüssigkeitsfließleitung (3) befindet, die sich an ihrem unteren Ende an eine im Wesentlichen horizontale Leitung (4) anschließt.

10. Anlage zur Durchführung eines Verfahrens nach einem der vorhergehenden Ansprüche, mit einem Einlasskanal (2) für die zu behandelnde Flüssigkeit, einer vertikalen Abwärtsleitung (3), welche in Richtung des Endes des Einlassrohres einen Schacht bildet, wobei die Abwärtsleitung sich im unteren Teil an eine im Wesentlichen horizontale Leitung (4) anschließt, Pumpeinrichtungen (11) zum Entnehmen eines Abzweigteilstroms stromaufwärts der vertikalen Abwärtsleitung und zum Leiten des Abzweigstroms in Richtung einer Mischanordnung (14), welche ein mit Ozon angereichertes Gas, Luft und/oder Sauerstoff empfängt, **dadurch gekennzeichnet, dass:**
- die Mischanordnung (14) im oberen Teil eines vertikalen Injektionsrohres (16) angeordnet ist, welches in die vertikale Abwärtsleitung (3) hineinragt, die von jeglichen Hindernissen frei ist, so dass die vertikale Abwärtsströmung (3a) eine durchgehende Flüssigkeitssäule bildet,
- das vertikale Injektionsrohr (16) in der Nähe seines unteren Endes einen statischen Mischer (19i) aufweist, um den Durchmesser der Gasblasen unter einem vorbestimmten Wert zu halten, und sein unteres Ende mindestens eine Öffnung (16a) aufweist, um das Wiedereinleiten des zweiphasigen Abzweigstroms in die vertikale Abwärtsströmung als mindestens ein Strahl (25) mit einer vertikalen, abwärts gerichteten Geschwindigkeitskomponente (Vz) zu gewährleisten,
- wobei die Länge des Injektionsrohres (16) und die Strahlauslassöffnung (16a) derart vorgesehen sind, dass die Wiedereinleitung unter einer Flüssigkeitshöhe (H) und mit einer vertikal nach unten gerichteten Geschwindigkeitskomponente (Vz) erfolgt, welche ausreichen, die Gasblasen nach unten mitzunehmen, ohne dass sie aufsteigen.

11. Anlage nach Anspruch 10, **dadurch gekennzeichnet, dass** der statische Mischer (19i) mindestens 50 cm vom unteren Ende des Injektionsrohres (16) beabstandet ist.

12. Anlage nach Anspruch 10 oder 11, **dadurch gekennzeichnet, dass** die Injektionsöffnung (16a) des Rohres nach unten gerichtet ist und das Wiedereinleiten des zweiphasigen Abzweigstroms in den Hauptstrom in Fließrichtung als vertikal nach unten gerichteter Strahl (25) aus einer ausreichenden Höhe (K) über der Richtungsänderung erfolgt, um des Ausbreiten des Strahls über den gesamten horizontalen Querschnitt der vertikalen Abwärtsströmung zu ermöglichen.

13. Anlage nach Anspruch 12, **dadurch gekennzeichnet, dass** das Injektionsrohr (16) über seinen gesamten unteren Querschnitt offen ist und der Wiedereinleitungsstrahl der Abzweigströmung ein "freier Strahl" ist.

14. Anlage nach einem der Ansprüche 10 bis 13, **dadurch gekennzeichnet, dass** mehrere statische Mischer (19) in dem Injektionsrohr verteilt und demontierbar angebracht sind.

15. Anlage nach einem der Ansprüche 10 bis 14, **dadurch gekennzeichnet, dass** jeder statische Mischer (19, 19i) vom Ablenkplatten aufweisenden Typ ist, welche durch entgegengesetzt geneigte Platten gebildet sind, die in zylindrischen Hülsen angeordnet sind.

16. Anlage nach einem der Ansprüche 10 bis 15, **dadurch gekennzeichnet, dass** sie Einrichtungen (M) aufweist, um den Durchsatz des Abzweigstroms ungeachtet einer Veränderung des Durchsatzes des Hauptstroms im Wesentlichen konstant zu halten, wobei der Betrag des Durchsatzes des Abzweigstroms so gewählt ist, dass die zur Behandlung des maximalen Durchsatzes des Hauptstroms erforderliche Ozondosis aufgenommen wird.

17. Anlage nach einem der Ansprüche 10 bis 16, **dadurch gekennzeichnet, dass** die Länge des in die Flüssigkeitssäule ragenden Teils des Injektionsrohres (16) mindestens 10 Meter beträgt.

18. Anlage nach einem der Ansprüche 10 bis 17, **dadurch gekennzeichnet, dass** die vertikale Abwärtsleitung (3) durch ein bereits existierendes Bauwerksteil, einen Abwasser-Hauptsammler oder eine Trinkwasserzuleitung, gebildet ist, das sich durch eine im Wesentlichen horizontale Leitung (4) fortsetzt.
